Europäisches Patentamt

European Patent Office

Office européen des brevets

(11) Veröffentlichungsnummer: **0 151 563**
**A2**

(12) **EUROPÄISCHE PATENTANMELDUNG**

(21) Anmeldenummer: **85890016.0**

(22) Anmeldetag: **22.01.85**

(51) Int. Cl.⁴: **F 16 K 31/06**

(30) Priorität: **27.01.84 AT 274/84**

(43) Veröffentlichungstag der Anmeldung:
**14.08.85 Patentblatt 85/33**

(84) Benannte Vertragsstaaten:
**DE FR GB IT**

(71) Anmelder: **ENFO Grundlagenforschungs AG**
**Aaretalstrasse 15**
**CH-5312 Döttingen(CH)**

(72) Erfinder: **Frisch, Herbert, Ing.**
**Reibergasse 9**
**A-1238 Wien(AT)**

(74) Vertreter: **Klein, Adam, Dipl.Ing.**
**Patentanwalt Dipl.Ing. Adam Klein Fasangasse 49**
**A-1030 Wien(AT)**

(54) **Magnetventil.**

(57) Ein Magnetventil zum Steuern eines pneumatischen oder hydraulischen Mediums ist mit einem durch die Magnetspule (8) gegen die Kraft einer Rückstellfeder (23) verstellbaren Anker (10) versehen, der wechselweise die Verbindung eines Ausganges (3) mit einem Zuflußkanal (4) und einem Abflußkanal (11) steuert. Die Sitze (5,15) des Zuflußkanals (4) und des Abflußkanals (11), der von einem axial in den Anker (10) hineinragenden Rohr (14) gebildet ist, liegen einander in Achsrichtung der Magnetspule (8) gegenüber. Zur Steuerung und Abdichtung des Zuflußkanals (4) und des Abflußkanals (11) ist am Anker (10) eine Scheibe (16) aus elastischem Material befestigt. Um die Abdichtung der Sitze (5,15) in beiden Endlagen des Ankers (10) einfach sicherzustellen, ist die Scheibe (16) in einer ungleiche radiale Flanken (18,19) aufweisenden Umfangsnut (17) des Ankers (10) gehalten, von denen die dem Zuflußkanal (4) gegenüberliegende Flanke (18) radial weiter nach innen vorragt als die dem Abflußkanal (11) gegenüberliegende Flanke (19).

EP 0 151 563 A2

Patentinhaber:     ENFO Grundlagenforschungs AG
                    Döttingen (Schweiz)

Gegenstand:       M a g n e t v e n t i l

---

Die Erfindung bezieht sich auf ein Magnetventil zum
Steuern eines pneumatischen oder hydraulischen Mediums, mit
einem durch die Magnetspule gegen die Kraft einer Rückstellfeder vestellbaren Anker, der wechselweise die Verbindung eines Ausganges mit einem Zuflußkanal und einem Abflußkanal
steuert, deren Enden einander in Achsrichtung der Magnetspule
gegenüberliegende Sitze bilden, wobei der Sitz des Abflußkanals von einem axial in den Anker hineinragenden Rohr gebildet
ist, das in der Nähe des Sitzes des Zuflußkanals endet, und
wobei die beiden Sitze des Zuflußkanals und des Abflußkanals
durch eine am Anker befestigte Scheibe aus elastischem Material gesteuert sind.

Ein Magnetventil dieser Bauart ist aus der DE-OS
28 55 902 bekannt. Durch die dort vorgesehene Verwendung eines Rohres für den Abflußkanal, das den Magnetanker axial durchsetzt, wird erreicht, daß das vom Ausgang zum Abflußkanal strömende Medium nicht mehr durch den Ringspalt zwischen dem Magnetanker und der Spule hindurchgeführt werden muß. Die ältere Ausführung, bei der die Sitze des Zuflußkanals und des Abflußkanals im Abstand voneinander im Bereich der Enden des Magnetankers vorgesehen sind, hat den Nachteil, daß der Strömungswiderstand im Ringspalt eine störende, sich in Abhängigkeit von der jeweiligen Strömungsgeschwindigkeit ändernde Kraft auf den Anker bewirkt. Einer Vergrößerung des Spaltquerschnittes steht die damit verbundene Verschlechterung der magnetischen Eigenschaften entgegen.

Bei der Ausführung mit einem den Anker durchsetzenden Rohr wird das gesteuerte Medium durch dieses Rohr hindurchgeführt, so daß der Ringspalt klein sein kann. Es ist dabei aber schwierig, mit der beide Sitze steuernden Scheibe einen dichten Abschluß beider Sitze zu erreichen und insbesondere sicherzustellen, daß bei dichtem Abschluß des Abflußkanals der Anker auch spielfrei an seiner Polfläche anliegt. Es treten dabei unangenehme Brummgeräusche und Vibrationen auf. Die bei der bekannten Ausführung als Variante vorgesehene verschiebbare Anordnung der Abdichtscheibe im Anker mit Hilfe einer elastischen Halterung ist aufwendig und verursacht Betriebsstörungen, da die elastische Halterung sich verklemmen oder brechen kann und auch einem Verschleiß unterliegt.

Der Erfindung liegt die Aufgabe zu Grunde, die bisher bekannten Magnetventile der eingangs angeführten Bauart zu

0151563

vereinfachen, in ihrer Funktion zu verbessern und auch die Betriebssicherheit zu erhöhen.

Mit der Erfindung wird diese Aufgabe dadurch gelöst, daß die Scheibe in einer ungleiche radiale Flanken aufweisenden Umfangsnut des Ankers gehalten ist, von denen die dem Zuflußkanal gegenüberliegende Flanke, von der die Scheibe beim Aufliegen auf dem Sitz des Zuflußkanals abgestützt ist, radial weiter nach innen vorragt als die dem Abflußkanal gegenüberliegende Flanke, von der die Scheibe beim Aufliegen auf dem Sitz des Abflußkanals abgestützt ist. Diese erfindungsgemäße Ausbildung zeichnet sich bei vorteilhafter Wirkung durch besondere Einfachheit aus.

Durch die ungleiche Einspannung und Abstützung der die Sitze steuernden Scheibe wird erreicht, daß die Scheibe bei geschlossenem Zuluftsitz ausreichend fest abgestützt ist, um dem vollen Mediumsdruck im Zuflußkanal standhalten zu können. In der anderen Endlage des Ankers, wenn dieser an der Polfläche des Kerns der Magnetspule anliegt, kann sich dagegen die elastische Scheibe ohne großen Kraftaufwand durchwölben, so daß der Abflußkanal sicher abgeschlossen und gleichzeitig damit auch ein festes und spielfreies Anliegen des Ankers an der Polfläche erzielt wird. Dadurch werden Brummgeräusche des angezogenen Magnetankers vermieden. Eine elastische Halterung der Scheibe ist überflüssig.

Bei einer bevorzugten Ausführungsform der Erfindung ragt die dem Zuflußkanal gegenüberliegende Flanke der Umfangsnut radial gegen das Zentrum der Scheibe bis in die Nähe des

- 4 -

0151563

Außenumfanges des Rohres vor. Dadurch wird eine optimale Abstützung der Scheibe erreicht, wenn sie auf dem Sitz des Zuflußkanals aufliegt. Die Scheibe kann deshalb verhältnismäßig dünn sein, so daß in der anderen Endlage des Ankers für die dort erforderliche Durchwölbung der Scheibe entsprechend kleine Kräfte ausreichen.

Praktisch die gleichen Vorteile ergeben sich, wenn gemäß einer weiteren Variante der Erfindung der Durchmesser der Scheibe um ein Vielfaches größer ist als der Durchmesser der Sitze des Zuflußkanals und des Abflußkanals. Auch diese Maßnahme begünstigt die Durchwölbung der Scheibe, wenn dies erforderlich ist.

In weiterer Ausgestaltung der Erfindung kann die Rückstellfeder des Ankers konzentrisch unmittelbar um das den Abflußkanal bildende Rohr herum zwischen dem Anker und dem die Polfläche für diesen bildenden Spulenkern angeordnet sind. Diese vorteilhafte Anordnung wird durch die erfindungsgemäße Abstützung der Scheibe möglich, weil hiebei nur kleine Federkräfte erforderlich sind. Mit der Verkleinerung der Feder wird auch die von dieser auf den Anker wirkende exzentrische Kraftkomponente verringert. Die Scheibe, die sich biegen und durchwölben kann, gleicht durch die Feder allenfalls noch verursachte Schiefstellungen des Ankers aus, so daß ein sicherer Abschluß der Sitze in jedem Fall gewährleistet ist. Die Anordnung der Feder im Zentrum bringt auch eine vereinfachte Herstellung des Ankers mit sich, weil außer einer zentralen Bohrung keine weitere Bearbeitung des Ankers erforderlich ist.

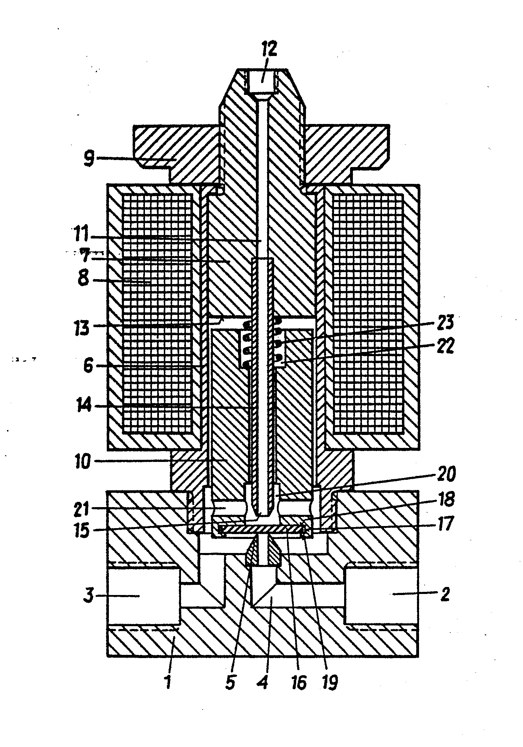

Weitere Einzelheiten und Vorteile der Erfindung ergeben sich aus der nachfolgenden Beschreibung eines Ausführungsbeispiels, das in der Zeichnung dargestellt ist. Diese zeigt einen axialen Mittelschnitt durch eine Ausführungsform des erfindungsgemäßen Magnetventils.

Das dargstellte Magnetventil besteht aus einem Ventilgehäuse 1, in dem ein Eingang 2 für den Zufluß des gesteuerten Druckmediums und ein Ausgang 3 vorgesehen sind. An den Eingang 2 schließt ein Zuflußkanal 4 an, der mit einem Sitz 5 endet, dessen Austrittsöffnung in der Mittelachse des Ventilgehäuses 1 vertikal nach oben gerichtet ist. Konzentrisch zum Sitz 5 ist eine Hülse 6 in das Ventilgehäuse 1 eingeschraubt, die im Bereich ihres oberen Endes durch einen Spulenkern 7 abgeschlossen ist. Auf dem Außenmantel der Hülse 6 sitzt eine Magnetspule 8, die mit Hilfe einer Mutter 9 auf dem Spulenkern 7 befestigt ist. Unterhalb des Spulenkerns 7 ist in der Hülse 6 ein Anker 10 verschiebbar geführt.

Durch den Ausgang 3 wird das gesteuerte Druckmedium einem Arbeitsgerät zugeführt. Für die Druckentlastung desselben ist in der Mittelachse des Spulenkerns 7 ein Abflußkanal 11 mit einer Anschlußbohrung 12 angeordnet. An dem innerhalb der Hülse 6 liegenden Ende des Spulenkerns 7, welches die Polfläche 13 für den Anschlag des Ankers 10 bildet, ist in den Spulenkern 7 ein Rohr 14 eingesetzt, durch das der Abflußkanal 11 gegen den Sitz 5 des Zuflußkanals 4 verlängert ist. Das Rohr 14 durchsetzt fast die gesamte Länge des Ankers 10 und bildet mit seinem unteren Ende einen Sitz 15 für den Abflußkanal 11, der dem Sitz 5 des Zuflußkanals 4 achsgleich gegenüberliegt. Den beiden Sitzen 5 und 15 ist eine Scheibe 16 aus
elastischem Material als gemeinsamer Verschlußkörper zugeordnet. Die Scheibe 16 ist am Anker 10 befestigt. Sie ist mit
ihrem Außenrand in eine nach innen offene Umfangsnut 17 eingesetzt, die ungleiche Flanken besitzt.

Die Flanke 18, die dem Sitz 5 des Zuflußkanals 4 zugewendet ist, ragt radial bis in die Nähe des Zentrums der
Scheibe 16 vor, so daß diese auf dieser Seite weitgehend abgestützt ist. Die andere Flanke 19 spannt dagegen nur den Rand
der Scheibe 16 ein, wodurch sich diese nach unten von der
Flanke 18 weg durchwölben kann. Im Bereich des Sitzes 15 ist
im Anker 10 eine Aussparung 20 vorgesehen, von der Querbohrungen 21 radial zum Mantel des Ankers 10 führen. Diese stellen
die Verbindung zwischen der Aussparung 20 und dem Ausgang 3
her. Am oberen Ende des Ankers 10 ist in diesem eine Bohrung
22 vorgesehen, in der eine Rückstellfeder 23 angeordnet ist,
die auf dem Rohr 14 geführt ist und sich mit ihrem anderen
Ende auf der Polfläche 13 abstützt.

In der in der Zeichnung dargestellten Stellung wird
der Anker 10 durch die Rückstellfeder 23 nach unten gedrückt,
so daß die Scheibe 16 den Sitz 5 des Zuflußkanals 4 verschließt.
Die weit nach innen reichende Flanke 18 der Umfangsnut 17
stützt hiebei die elastische Scheibe 16 ab, so daß auch bei
höherem Eingangsdruck ein zuverlässiger Verschluß des Sitzes 5
gesichert ist. Sobald die Magnetspule 8 erregt wird, zieht sie den Anker 10 an, worauf sich dieser gegen die Kraft der Rückstellfeder 23 an die Polfläche 13 anlegt. Da die verhältnismäßig kleine Rückstellfeder 23 eine nur geringe exzentrische Kraftkomponente auf den Anker 10 ausübt, liegt dieser an der Polfläche 13 weitgehend gleichmäßig an, so daß ein bei Magnetventilen oft auftretendes Brummen vermieden wird. Die Scheibe 16 verschließt in dieser Stellung den Sitz 15 des Abflußkanals 11. Da die kurze Flanke 19 der Umfangsnut 17 die Scheibe 16 hiebei nur wenig abstützt, kann sich diese nach unten wölben, so daß sie den Sitz 15 sicher verschließt, das feste Anliegen des Ankers 10 an der Polfläche 13 aber nicht behindert.

In dieser Stellung des Magnetventils ist der Zuflußkanal 4 offen, so daß das durch den Eingang 2 zugeführte Druckmedium durch den Ausgang 3 zum angeschlossenen Arbeitsgerät gelangen kann. Wenn anschließend die Erregung der Magnetspule 8 abgeschaltet wird, drückt die Rückstellfeder 23 den Anker 10 wieder nach unten, so daß der Sitz 5 des Zuflußkanals 4 durch die Scheibe 16 verschlossen wird. Der Ausgang 3 ist hiebei durch die Querbohrungen 21, die Aussparung 20 und den Sitz 15 mit dem Abflußkanal 11 verbunden, so daß eine Druckentlastung erfolgen kann. Das zurückströmende Medium braucht hiebei nicht durch den engen Ringspalt am Außenumfang des Ankers 10 hindurchströmen, sondern es wird durch das den Abflußkanal 11 verlängernde Rohr 14 abgeleitet. Der Anker 10 wird dabei durch die Strömungskräfte praktisch nicht beeinflußt und es können sich auch keine Verunreinigungen, die im Druckmedium allenfalls mitgeführt werden, im Ringspalt ablagern und so die

- 8 -

0151563

Funktion des Magnetventils stören. Die dargestellte und beschriebene Bauart des Magnetventils zeichnet sich deshalb durch einen besonders einfachen Aufbau und durch große Funktionssicherheit aus.

Patentansprüche:

Patentansprüche:

1. Magnetventil zum Steuern eines pneumatischen oder hydraulischen Mediums, mit einem durch die Magnetspule gegen die Kraft einer Rückstellfeder verstellbaren Anker, der wechselweise die Verbindung eines Ausganges mit einem Zuflußkanal und einem Abflußkanal steuert, deren Enden einander in Achsrichtung der Magnetspule gegenüberliegende Sitze bilden, wobei der Sitz des Abflußkanals von einem axial in den Anker hineinragenden Rohr gebildet ist, das in der Nähe des Sitzes des Zuflußkanals endet, und wobei die beiden Sitze des Zuflußkanals und des Abflußkanals durch eine am Anker befestigte Scheibe aus elastischem Material gesteuert sind, dadurch gekennzeichnet, daß die Scheibe (16) in einer ungleiche radiale Flanken (18,19) aufweisenden Umfangsnut (17) des Ankers (10) gehalten ist, von denen die dem Zuflußkanal (4) gegenüberliegende Flanke (18), von der die Scheibe (16) beim Aufliegen auf dem Sitz (5) des Zuflußkanals (4) abgestützt ist, radial weiter nach innen vorragt als die dem Abflußkanal (11) gegenüberliegende Flanke (19), von der die Scheibe (16) beim Aufliegen auf dem Sitz (15) des Abflußkanals (11) abgestützt ist.

2. Magnetventil nach Anspruch 1, dadurch gekennzeichnet, daß die dem Zuflußkanal (4) gegenüberliegende Flanke (18) der Umfangsnut (17) radial gegen das Zentrum der Scheibe (16) bis in die Nähe des Außenumfanges des Rohres (14) vorragt.

3. Magnetventil nach Anspruch 1 oder 2, dadurch gekennzeichnet, daß der Durchmesser der Scheibe (16) um ein Vielfaches größer ist als der Durchmesser der Sitze (5,15) des Zuflußkanals (4) und des Abflußkanals (11).

4. Magnetventil nach Anspruch 1, 2 oder 3, dadurch gekennzeichnet, daß die Rückstellfeder (23) des Ankers (10) konzentrisch unmittelbar um das den Abflußkanal (11) bildende Rohr (14) herum zwischen dem Anker (10) und dem die Polfläche (13) für diesen bildenden Spulenkern (7) angeordnet ist.

Patentanwalt
Dipl. Ing. Adam Klein
1030 Wien, Fasangasse 49
Telefon 78 39 20